# EUROPEAN PATENT APPLICATION

(11) **EP 1 933 487 A2**
(43) Date of publication of application: **18.06.2008**
(21) Application number: 07023442.2
(22) Date of filing: 04.12.2007
(51) Int. Cl.: H04J 3/16, H04J 14/02

(54) **System and method for protecting an optical network**

(30) Priority: 11.12.2006 US 609120
(71) Applicant: Fujitsu Ltd., Kawasaki-shi, Kanagawa 211-8588 (JP)
(72) Inventor: Akasak, Youichi, Allen Texas 75031 (US); Naito, Takao, Plano Texas 75024 (US)
(74) Representative: HOFFMANN EITLE

(57) **Abstract**

In accordance with the teachings of the present invention, a method for protecting traffic in a passive optical network (PON), includes transmitting downstream traffic destined for one or more optical network units (ONUs) from a first set of one or more transmitters. The method further includes substantially simultaneously transmitting the same downstream traffic destined for the one or more ONUs from a second set of one or more transmitters. The method further includes selecting either the downstream traffic from the first set of transmitters or the second set of transmitters for communication to a remote node (RN) of the PON.

## Description

### TECHNICAL FIELD

The present invention relates generally to communication systems and, more particularly, to a system and method for protecting an optical network.

### BACKGROUND

In recent years, a bottlenecking of communication networks has occurred in the portion of the network known as the access network. Bandwidth on longhaul optical networks has increased sharply through new technologies such as wavelength division multiplexing (WDM) and transmission of traffic at greater bit rates. Metropolitan-area networks have also seen a dramatic increase in bandwidth. However, the access network, also known as the last mile of the communications infrastructure connecting a carrier's central office to a residential or commercial customer site, has not seen as great of an increase in affordable bandwidth. The access network thus presently acts as the bottleneck of communication networks, such as the internet.

Power-splitting passive optical networks (PSPONs) offer one solution to the bottleneck issue. PSPONs refer to typical access networks in which an optical line terminal (OLT) at the carrier's central office transmits traffic over one or two downstream wavelengths for broadcast to optical network units (ONUs). In the upstream direction, ONUs typically time-share transmission of traffic in one wavelength. An ONU refers to a form of access node that converts optical signals transmitted via fiber to electrical signals that can be transmitted to individual subscribers and vice versa. PSPONs address the bottleneck issue by providing greater bandwidth at the access network than typical access networks. For example, networks such as digital subscriber line (DSL) networks that transmit traffic over copper telephone wires typically transmit at a rate between approximately 144 kilobits per second (Kb/s) and 1.5 megabits per second (Mb/s). Conversely, Broadband PONs (BPONs), which are example PSPONs, are currently being deployed to provide hundreds of megabits per second capacity shared by thirty-two users. Gigabit PONs (GPONs), another example of a PSPON, typically operate at speeds of up to 2.5 gigabits per second (Gb/s) by using more powerful transmitters, providing even greater bandwidth. Other PSPONs include, for example, asynchronous transfer mode PONs (APONs) and gigabit Ethernet PONs (GEPONs).

Although PSPON systems provide increased bandwidth in access networks, demand continues to grow for higher bandwidth. One solution, wavelength division multiplexing PON (WDMPON), would increase downstream (and upstream) capacity dramatically but inefficiently. WDMPONs refer to access networks in which each ONU receives and transmits traffic over a dedicated downstream and upstream wavelength, respectively. Although WDMPONs would increase capacity dramatically, they would do so at a prohibitively high cost for many operators and would supply capacity far exceeding current or near-future demand. Hybrid PON (HPON) fixes this problem by offering a simple and efficient upgrade from existing PSPONs that may easily and efficiently be upgraded (to, for example, a WDMPON). An HPON provides greater downstream capacity cost-efficiently by having groups of two or more ONUs share downstream WDM wavelengths. An HPON may include both an HPON that transmits downstream traffic in a plurality of wavelengths each shared by a group of wavelength-sharing ONUs (a WS-HPON) and an HPON that transmits downstream traffic in a unique wavelength for each ONU (retaining PSPON characteristics in the upstream direction).

Although PSPONs and HPONs (and even WDMPONs) may offer much greater bandwidth than typical access networks such as DSL networks, they are not protected from failures in the OLT, ONUs, and optical fiber. Therefore, if one of these elements fails, the systems cannot communicate traffic (at least in part) until the failure is corrected. Because demand for greater capacity continues to grow, a need exists for cost-efficient solutions for protecting PSPONs and HPONs (and even WDMPONs) from a failure in one or more elements.

### SUMMARY

In accordance with the teachings of the present invention, a method for protecting traffic in a passive optical network (PON), includes transmitting downstream traffic destined for one or more optical network units (ONUs) from a first set of one or more transmitters. The method further includes substantially simultaneously transmitting the same downstream traffic destined for the one or more ONUs from a second set of one or more transmitters. The method further includes selecting either the downstream traffic from the first set of transmitters or the second set of transmitters for communication to a remote node (RN) of the PON.

In accordance with further teachings of the present invention, a method for protecting traffic in a passive optical network (PON), includes receiving at a redundant optical network unit (ONU) downstream traffic destined for a plurality of primary ONUs. The method further includes determining that the downstream traffic was not received by one or more of traffic routing devices. The method further includes communicating the downstream traffic received at the redundant ONU to the one or more traffic routing devices.

Certain embodiments of the invention may provide one or more technical advantages. A technical advantage of one embodiment may be that using one redundant ONU to protect all of the ONUs allows the bandwidth to be protected without the significant cost of using a redundant ONU to protect each ONU.

A technical advantage of another embodiment may be that transmitting, substantially simultaneously, the same downstream traffic from both sets of transmitters and selecting the downstream traffic communicated allows both sets of transmitters to remain active and not in cold standby, such as in some conventional systems. Therefore, bandwidth is available to the subscriber without having to wait for a set of transmitters to warm up and then discover and range each ONU after a failure in the OLT.

A technical advantage of another embodiment may be that performing discovery and ranging of the ONUs at one set of transmitters and then communicating the discovery and ranging of the ONUs to the other set of transmitters allows both sets of transmitters to remain active without both sets of transmitters having to perform discovery and ranging.

It will be understood that the various embodiments of the present invention may include some, all, or none of the enumerated technical advantages. In addition other technical advantages of the present invention may be readily apparent to one skilled in the art from the figures, description, and claims included herein.

### BRIEF DESCRIPTION OF THE DRAWINGS

For a more complete understanding of the present invention and its features and advantages, reference is now made to the following description, taken in conjunction with the accompanying drawings, in which:
FIGURE 1 is a diagram illustrating an example PSPON;
FIGURE 2 is a diagram illustrating an example Hybrid PON (HPON);
FIGURE 3 is a diagram illustrating an example PSPON with redundant protective elements;
FIGURE 4 is a flowchart describing one embodiment of the operation for protecting against failures in the OLT of the PSPON of FIGURE 3;
FIGURE 5 is a flowchart describing one embodiment of the operation for protecting against failures in the ONUs of the PSPON of FIGURE 3;
FIGURE 6 is a diagram illustrating an example HPON with redundant protective elements; and
FIGURE 7 is a flowchart describing one embodiment of the operation for protecting against failures in the ONUs of the HPON of FIGURE 6.

### DETAILED DESCRIPTION

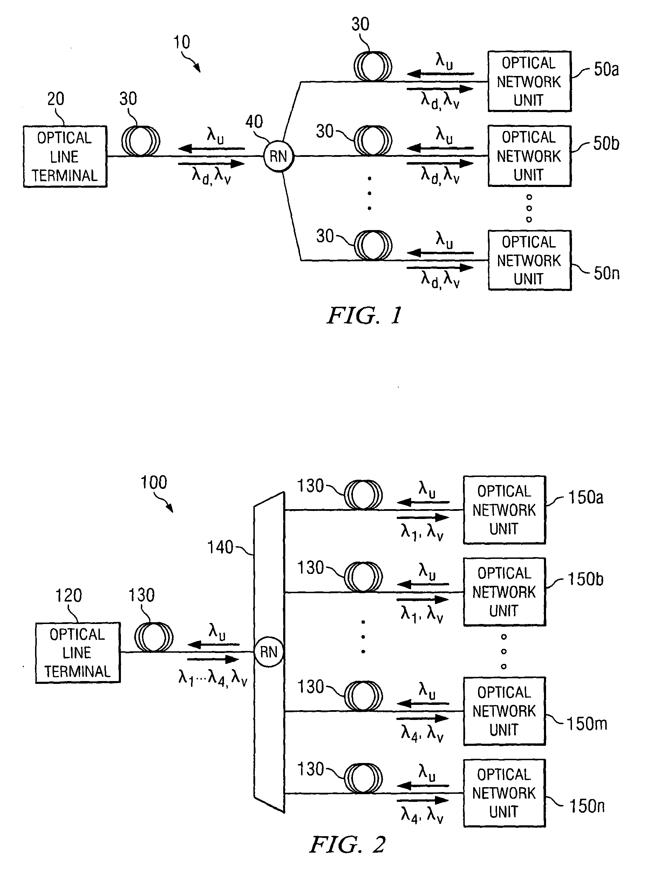

FIGURE 1 is a diagram illustrating an example Power Splitting Passive Optical Network (PSPON) 10. Typically, PSPONs have been employed to address the bottlenecking of communications networks in the portion of the network known as the access network. In recent years, bandwidth on longhaul optical networks has increased sharply through new technologies such as wavelength division multiplexing (WDM) and transmission of traffic at greater bit rates. In addition, metropolitan-area networks have also seen a dramatic increase in bandwidth. However, the access network, also known as the last mile of the communications infrastructure connecting a carrier's central office to a residential or commercial customer site, has not seen as great of an increase in affordable bandwidth. The access network thus presently acts as the bottleneck of communication networks, such as the internet.

PSPONs address the bottleneck issue by providing greater bandwidth at the access network than typical access networks. For example, networks such as digital subscriber line (DSL) networks that transmit traffic over copper telephone wires typically transmit at a rate between approximately 144 kilobits per second (Kb/s) and 1.5 megabits per second (Mb/s). Conversely, broadband PONs (BPONs) are currently being deployed to provide hundreds of megabits per second capacity shared by thirty-two users. Gigabit PONs (GPONs), which typically operate at speeds of up to 2.5 gigabits per second (Gb/s) by using more powerful transmitters, provide even greater bandwidth.

Referring back to PSPON 10 of FIGURE 1, PSPON 10 includes an Optical Line Terminal (OLT) 20, optical fiber 30, a Remote Node (RN) 40, and Optical Network Units (ONUs) 50. PSPON 10 refers to typical access networks in which an optical line terminal (OLT) at the carrier's central office transmits traffic over one or two downstream wavelengths for broadcast to optical network units (ONUs). PSPON 10 may be an asynchronous transfer mode PON (APON), a BPON, a GPON, a gigabit Ethernet PON (GEPON), or any other suitable PSPON. A feature common to all PSPONs 10 is that the outside fiber plant is completely passive. Downstream signals transmitted by the OLT are passively distributed by the RN to downstream ONUs coupled to the RN through branches of fiber, where each ONU is coupled to the end of a particular branch. Upstream signals transmitted by the ONUs are also passively forwarded to the OLT by the RN.

OLT 20, which may be an example of an upstream terminal, may reside at the carrier's central office, where it may be coupled to a larger communication network. OLT 20 includes a transmitter operable to transmit traffic in a downstream wavelength, such as λ_{d}, for broadcast to all ONUs 50, which may reside at or near customer sites. OLT 20 may also include a transmitter operable to transmit traffic in a second downstream wavelength λᵥ (which may be added to λ_{d}) for broadcast to all ONUs 50. As an example, in typical GPONs, λᵥ may carry analog video traffic. Alternatively, λᵥ may carry digital data traffic. OLT 20 also includes a receiver operable to receive traffic from all ONUs 50 in a time-shared upstream wavelength, λᵤ. In typical PSPONs, downstream traffic in λ_{d} and λᵥ is transmitted at a greater bit rate than is traffic in λᵤ, as PSPONs typically provide lower upstream bandwidth than downstream bandwidth. It should be noted that "downstream" traffic refers to traffic traveling in the direction from the OLT (or upstream terminal) to the ONUs (or downstream terminals), and "upstream" traffic refers to traffic traveling in the direction from the ONUs (or downstream terminals) to the OLT (or upstream terminal). It should further be noted that λ_{d} may include the band centered around 1490nm, λᵥ may include the band centered around 1550nm, and λᵤ may include the band centered around 1311nm in particular PSPONs.

Optical fiber 30 may include any suitable fiber to carry upstream and downstream traffic. In certain PSPONs 10, optical fiber 30 may comprise, for example, bidirectional optical fiber. In other PSPONs 10, optical fiber 30 may comprise two distinct fibers. RN 40 of PSPON 10 (which may also generally be referred to as a distribution node) comprises any suitable power splitter, such as an optical coupler, and connects OLT 20 to ONUs 50. RN 40 is located in any suitable location and is operable to split a downstream signal such that each ONU 50 receives a copy of the downstream signal. Due to the split and other possible power losses, each copy forwarded to an ONU has less than 1/*N* of the power of the downstream signal received by RN 40, where *N* refers to the number of the split ratio of the coupler. In addition to splitting downstream signals, RN 40 is also operable to combine into one signal upstream, time-shared signals transmitted by ONUs 50. RN 40 is operable to forward the upstream signal to OLT 20.

ONUs 50 (which may be examples of downstream terminals) may include any suitable optical network unit or optical network terminal (ONT) and generally refer to a form of access node that converts optical signals transmitted via fiber to electrical signals that can be transmitted to individual subscribers. Subscribers may include residential and/or commercial customers. Typically, PONs 10 have thirty-two ONUs 50 per OLT 20, and thus, many example PONs may be described as including this number of ONUs. However, any suitable number of ONUs per OLT may be provided. ONUs 50 may include triplexers that comprise two receivers to receive downstream traffic (one for traffic in λ_{d} and the other for traffic in λᵥ) and one transmitter to transmit upstream traffic in λᵤ. The transmission rate of the ONU transmitter is typically less than the transmission rate of the OLT transmitter (due to less demand for upstream capacity than for downstream capacity). Each ONU 50 is operable to process its designated downstream traffic and to transmit upstream traffic according to an appropriate time-sharing protocol (such that the traffic transmitted by one ONU in λᵤ does not collide with the traffic of other ONUs in λᵤ).

In operation, the OLT 20 of a typical PSPON 10 transmits downstream traffic destined for one or more of ONUs 50 in λ_{d}. OLT 20 may also transmit downstream analog video traffic for broadcast to ONUs 50 in λᵥ. Traffic in wavelengths λ_{d} and λᵥ is combined at OLT 20 and travels over optical fiber 30 to RN 40. RN 40 splits the downstream traffic into a suitable number of copies and forwards each copy to a corresponding ONU. Each ONU receives a copy of the downstream traffic in λ_{d} and λᵥ and processes the signal. Suitable addressing schemes may be used to identify which traffic is destined for which ONU 50. Each ONU 50 may also transmit upstream traffic in λᵤ along fiber 30 according to a suitable time-sharing protocol (such that upstream traffic does not collide). RN 40 receives the upstream traffic from each ONU 50 and combines the traffic from each ONU 50 into one signal. RN 40 forwards the signal over fiber 30 to OLT 20. OLT 20 receives the signal and processes it.

Although PSPONs may offer much greater bandwidth than typical access networks such as DSL networks, bandwidth requirements are projected to exceed even the increased capacity offered by typical PSPONs. For example, some streaming video and online gaming applications presently require bit rates of approximately one to ten Mb/s, and some IP high definition television and video-on-demand systems presently require bit rates of approximately twenty Mb/s. Future demands for bandwidth are projected to be even greater. Thus, a need exists for a hybrid PON (HPON) that offers a simple and efficient upgrade from existing PSPONs and that may easily and efficiently be upgraded (to, for example, a WDMPON).

FIGURE 2 is a diagram illustrating an example HPON 100. Example HPON 100 comprises OLT 120, optical fiber 130, RN 140, and ONUs 150. Example HPON 100, a hybrid between a PSPON and a WDMPON, provides a cost-efficient upgrade solution for many network operators. Example HPON 100 provides greater downstream capacity cost-efficiently by having groups of two or more ONUs 150 share downstream WDM wavelengths. It should be noted that an HPON generally refers to any suitable PON that is not a full WDMPON but that is operable to route downstream traffic in particular wavelengths to particular ONUs (and to transmit upstream traffic in any suitable manner). An HPON may include both an HPON that transmits downstream traffic in a plurality of wavelengths each shared by a group of wavelength-sharing ONUs (a WS-HPON) and an HPON that transmits downstream traffic in a unique wavelength for each ONU (retaining PSPON characteristics in the upstream direction).

In the illustrated example, ONUs 150a-150n may share λ₁-λ₄. Traffic in λᵥ is broadcast to all ONUs. It should be noted that any suitable number of ONUs may be associated with one OLT. Additionally, any suitable number of ONUs may share one or more wavelengths in a WS-HPON. Using shared wavelengths in a WS-HPON permits the use of less costly optics components than in, for example, WDMPON. For example, sharing downstream wavelengths in HPON 100 reduces the cost and stability requirements of the multiplexer and transmitter/receiver components in the network. Due to the sharing of wavelengths, the spacing between WDM wavelengths may be increased to relax the specifications of wavelength selective elements and to relax the requirements for transmitter wavelength stability and temperature stability of passive components. By using less expensive components to provide a desired increase in downstream bandwidth, HPON 100 is a much more attractive upgrade solution for many network operators than WDMPON.

OLT 120 of HPON 100 (which may be an example of an upstream terminal) may reside at the carrier's central office and comprises four transmitters operable to transmit downstream traffic over λ₁-λ₄, which are to be shared by groups of ONUs 150. OLT 120 may also comprise an additional transmitter operable to transmit an analog video signal in λᵥ for broadcast to all ONUs 150. OLT 120 may also comprise a multiplexer operable to multiplex the wavelengths transmitted by the transmitters of OLT 120. OLT 120 may also comprise a receiver operable to receive upstream traffic in wavelength λᵤ, which is time-shared by ONUs 150. It should be noted that although the illustrated embodiment shows only four downstream wavelengths to be shared by ONUs 150, any suitable number of downstream wavelengths may be transmitted at OLT 120 and shared by groups of ONUs 150. In addition, any suitable number of broadcast downstream wavelengths may be transmitted from OLT 120 for broadcast to all ONUs (i.e., not just the traffic in λᵥ, as illustrated). It should be further noted that traffic in any suitable number of upstream wavelengths may be received at OLT 120 (including traffic in multiple sub-bands of the GPON one hundred nanometer upstream band) and an upstream wavelength need not be time-shared by all ONUs (for example, a separate upstream wavelength may be time-shared by each group of downstream, wavelength-sharing ONUs).

Optical fiber 130 may comprise any suitable fiber to carry upstream and downstream traffic. In certain HPONs 100, optical fiber 130 may comprise, for example, bidirectional fiber. In other HPONs 100, optical fiber 130 may comprise two distinct fibers.

RN 140 of HPON 100 may comprise a multiplexer and a power splitter. The multiplexer is operable to demultiplex downstream wavelengths λ₁-λ₄ and forward traffic in each of these wavelengths to a corresponding group of wavelength-sharing ONUs 150. The power splitter is operable to receive and split traffic in downstream wavelength λᵥ (if applicable) for broadcast to all ONUs 150. With regard to upstream traffic, the power splitter of RN 140 is also operable to receive and combine traffic in time-shared λᵤ from ONUs 150 into one signal. RN 140 is further operable to forward the upstream signal to OLT 120. It should be noted that although RN 140 is referred to as a remote node, "remote" refers to RN 140 being communicatively coupled to OLT 120 and ONUs 150 in any suitable spatial arrangement. A remote node may also generally be referred to as a distribution node.

ONUs 150 (which may be examples of downstream terminals) may comprise any suitable optical network unit or ONT and may serve residential and/or commercial customers. There may be any suitable number of ONUs. Each ONU 150 may comprise one receiver to receive traffic over a shared wavelength, one of λ₁-λ₄, and one receiver to receive traffic over λᵥ (if applicable). Each ONU 150 may also comprise one transmitter to transmit upstream traffic over time-shared λᵤ. Each ONU 150 may thus comprise a triplexer.

In operation, the transmitters in OLT 120 transmit downstream traffic over λ₁-λ₄, which are to be shared by groups of ONUs 150, and (in certain cases) one transmitter in OLT 120 transmits downstream traffic to be broadcast to all ONUs 150 over λᵥ, Traffic in wavelengths λ₁-λ₄ and λᵥ is multiplexed at OLT 120 into one signal, and the signal travels over optical fiber 130 to RN 140. RN 140 filters the traffic in λᵥ out of the signal and forwards the traffic to the power splitter where it is split for broadcast to all ONUs 150. At the multiplexer, RN 140 demultiplexes the signal comprising the traffic in the remaining wavelengths (λ₁-λ₄) and forwards the traffic in each wavelength, one of λ₁-λ₄, to its corresponding group of wavelength-sharing ONUs 150. Each ONU 150 receives traffic over one or more of the wavelengths that it shares with other ONUs 150 and processes the traffic (according to a suitable protocol). Each ONU 150 may also receive and process traffic over λᵥ. In the upstream direction, each ONU 150 time-shares use of λᵤ according to a suitable protocol. RN 140 receives upstream traffic carried over time-shared λᵤ from each of the ONUs 150 and combines the traffic into one signal using the power splitter. RN 140 forwards the combined signal over fiber 130 to OLT 120. OLT 120 receives the signal at its receiver and processes the traffic.

Although PSPONs and HPONs may offer much greater bandwidth than typical access networks such as DSL networks, the PSPONs and HPONs described above are not protected from failures in the OLT, ONUs, and optical fiber. Therefore, if one of these elements fails, the PSPON or HPON systems cannot communicate traffic (at least in part) until the failure is corrected. Conventionally, to solve this problem a secondary redundant system may be put in place to provide traffic protection when the first system fails. However, adding a redundant OLT, a redundant RN, a redundant ONU for each ONU in the system, and redundant optical fiber connecting all of the elements drastically increases the cost of the system. Therefore, although bandwidth is protected, the cost is too high for both the provider and the subscriber.

Additionally, even if only a redundant OLT is used in each system, the redundant OLT is conventionally kept in cold standby. A redundant OLT kept in cold standby must first determine that a failure has occurred, and then the redundant OLT must warm up to an active state where it can then begin the process of discovering and ranging each individual ONU in the system. Until all of these steps are complete, the redundant OLT is unable to provide bandwidth. Therefore, after a failure in such a system, the ONUs may not receive bandwidth for approximately five minutes. As a result, such a system is unable, when a failure occurs, to provide bandwidth in a timeframe sufficient for many subscribers. The present invention, however, provides a technique for protecting PSPONs or HPONs without the significant delay and costs of the conventional protected systems. In doing so, the present invention is capable of protecting the systems in case of a failure in the OLT, ONUs, or the optical fiber.

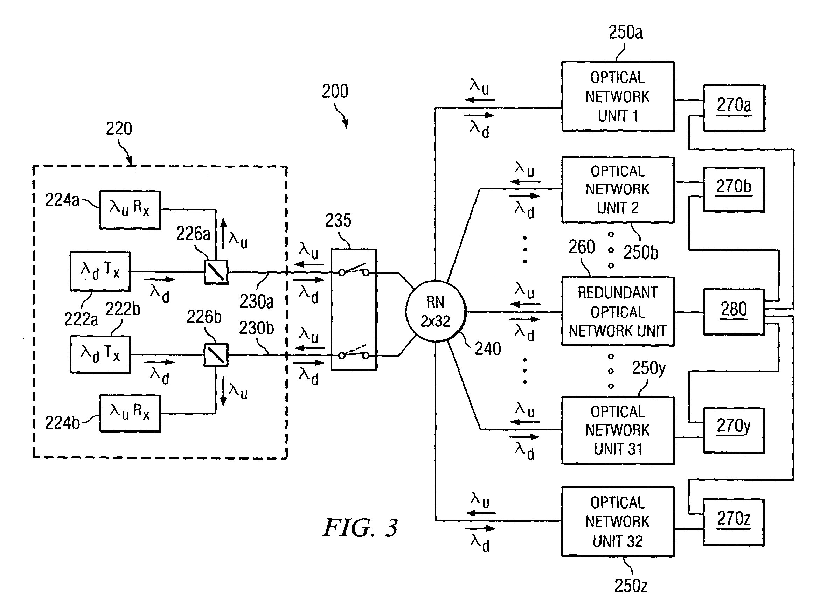

FIGURE 3 is a diagram illustrating an example Power Splitting Passive Optical Network (PSPON) 200 with redundant protective elements. PSPON 200 includes an OLT 220 having a primary transmitter 222a and a redundant transmitter 222b that each transmit the same downstream traffic to a selector 235. Selector 235 designates which downstream traffic is transmitted to ONUs 250, preventing two copies of identical traffic from being transmitted to ONUs 250. PSPON further includes a redundant ONU 260 that may provide signals to one or more failed ONUs 250.

PSPON 200 also includes optical fibers 230, a Remote Node (RN) 240, switches 270, and a redundant switch 280. PSPON 200 refers to typical access networks in which an OLT at the carrier's central office transmits traffic over one or two downstream wavelengths for broadcast to ONUs. PSPON 200 may be an APON, a BPON, a GPON, a GEPON, or any other suitable PSPON. According to the illustrated embodiment, downstream signals transmitted by the OLT are passively distributed by the RN to downstream ONUs coupled to the RN through branches of fiber, where each ONU is coupled to the end of a particular branch. Upstream signals transmitted by the ONUs are also passively forwarded to the OLT by the RN.

OLT 220, which may be an example of an upstream terminal, may reside at the carrier's central office, where it may be coupled to a larger communication network. OLT 220 includes transmitter 222a operable to transmit traffic in a downstream wavelength, such as λ_{d}, for broadcast to all ONUs 250, which may reside at or near customer sites. OLT 220 may also include a transmitter (not illustrated) operable to transmit traffic in a second downstream wavelength λᵥ (which may be multiplexed with λ_{d}) for broadcast to all ONUs 250. As an example, in typical GPONs, λᵥ may carry analog video traffic. Alternatively, λᵥ may carry digital data traffic. OLT 220 also includes a receiver 224a operable to receive traffic from all ONUs 250 in a time-shared upstream wavelength, λᵤ. The combination of transmitter 222a, the transmitter operable to transmit λᵥ, and receiver 224b are collectively referred to as the "primary transponder set." It should be noted that, in a particular embodiment, λ_{d} may include the band centered around 1490nm, λᵥ may include the band centered around 1550nm, and λᵤ may include the band centered around 1311nm in particular PSPONs.

Unlike OLT 20 of PSPON 10, seen in FIGURE 1, OLT 220 also includes a redundant set of devices substantially similar to the primary transponder set. Therefore, OLT 220 includes redundant transmitter 222b operable to transmit traffic in a downstream wavelength, such as λ_{d}, for broadcast to all ONUs 250, an optional redundant transmitter (not illustrated) operable to transmit traffic in a second downstream wavelength λᵥ (which may be multiplexed with λ_{d} of the redundant transmitter) for broadcast to all ONUs 250, and a redundant receiver 224b operable to receive traffic from all ONUs 250 in a time-shared upstream wavelength, λᵤ. The redundant set of devices is collectively referred to as the "redundant transponder set." In one embodiment, the redundant transponder set does not include redundant receiver 224b. Therefore, receiver 224a of the primary transponder is coupled to both optical fibers 230. In another embodiment, the redundant transponder set allows traffic to be transmitted and received at OLT 220 if the primary transponder set fails. In a further embodiment, the redundant transponder set may be located in a redundant OLT separate from OLT 220. In this embodiment, the redundant OLT may be capable of transmitting and receiving traffic if OLT 220 fails.

OLT 220 also includes filters 226. Each filter 226a and 226b may comprise any suitable filter and is operable to pass the traffic in λ_{d} to RN 240. Filters 226a and 226b are further operable to direct the upstream traffic in wavelength λᵤ to receivers 224a and 224b, respectively. In addition, filters 226 are operable to direct the traffic in wavelength λᵥ from the transmitter operable to transmit λᵥ (not illustrated) to RN 240 (such that the traffic in both λ_{d} and λᵥ is forwarded to RN 240 over the same fiber).

Optical fibers 230 may include any suitable fiber to carry upstream and downstream traffic. According to the illustrated embodiment, optical fiber 230a may be connected to the primary transponder set of OLT 220. Optical fiber 230b may be connected to the redundant transponder set of OLT 220. In certain PSPONs 200, optical fibers 230 may comprise, for example, bidirectional optical fibers. In other PSPONs 200, optical fibers 230 may each comprise two distinct fibers, one fiber capable of carrying traffic upstream and the other capable of carrying traffic downstream.

Selector 235 may include any suitable switch operable to alternatively open and close optical fibers 230a and 230b so that only one is capable of communicating traffic through the switch at a time. When the switch element associated with one of the fibers is closed, the switch element associated with the other fiber is open. According to the illustrated embodiment, selector 235 allows both transmitters 222a and 222b to be active at the same time (since traffic communicated from one of the transmitters is terminated at selector 235). This allows traffic to be transmitted by transmitter 222b immediately after discovering that transmitter 222a has failed, or vice versa. Since transmitter 222a is already active, and not in cold standby such as in some conventional systems, bandwidth is available to the subscriber without having to wait for transmitter 222b to warm up and then discover and range each ONU 250, as discussed below. As a result, selector 235 eliminates the need to place transmitter 222b in cold standby to prevent it from transmitting traffic that is already being handled by transmitter 222a. In one embodiment, the signal to alternate the opening and closing of optical fibers 230a and 230b is received from OLT 220. In another embodiment, the signal is received by selector 235 from redundant switch 280, as described below.

RN 240 of PSPON 200 (which may also generally be referred to as a distribution node) comprises any suitable power splitter, such as an optical coupler, and connects OLT 220 to ONUs 250. RN 240 is located in any suitable location and is operable to split a downstream signal such that each ONU 250 receives a copy of the downstream signal. In particular embodiments, RN 240 comprises a 2xN coupler (in the illustrated example a 2x32 coupler) where N is the number of ONUs 250. In another embodiment, RN 240 may comprise a cascade/tree of couplers or any other component, or combination of such, operable to combine and split optical signals. Despite having two inputs from OLT 220, RN 240 only receives one copy of the downstream signal as a result of selector 235 only closing one optical fiber 230a or 230b. In addition to splitting downstream signals, RN 240 is also operable to combine signals transmitted upstream by ONUs 250 (such as λᵤ) into two identical upstream signals, one for each receiver 224a and 224b of OLT 220. RN 240 is operable to forward the upstream signals to OLT 220. However, as a result of selector 235 only closing one of the optical fibers 230, only one of the upstream signals is communicated through selector 235 to OLT 220, preventing OLT 220 from receiving identical upstream signals.

ONUs 250, referred to as primary ONUs, may include any suitable optical network unit or optical network terminal (ONT) and generally refer to a form of access node that converts optical signals transmitted via fiber to electrical signals that can be transmitted to individual subscribers. Subscribers may include residential and/or commercial customers. Typically, PONs 200 may have thirty-two ONUs 50 per OLT 220. However, any suitable number of ONUs may be provided. In particular embodiments, ONUs 250 may include triplexers that comprise two receivers to receive downstream traffic (one for traffic in λ_{d} and the other for traffic in λᵥ) and one transmitter to transmit upstream traffic in λᵤ. The transmission rate of the ONU transmitter is typically less than the transmission rate of the OLT transmitter (due to less demand for upstream capacity than for downstream capacity). Each ONU 250 is operable to process its designated downstream traffic and to transmit upstream traffic according to an appropriate time-sharing protocol (such that the traffic transmitted by one ONU in λᵤ does not collide with the traffic of other ONUs in λᵤ).

Redundant ONU 260 is substantially similar to ONUs 250. However, unlike ONUs 250, which convert signals that can be transmitted to individual subscribers, redundant ONU 260 converts signals that may be transmitted to other ONUs 250 (more specifically, the switch 270 associated with the ONU 250), if an ONU 250 fails. In particular embodiments, the signal converted by redundant ONU 260 may be transmitted to an ONU 250 only if the ONU 250 fails. Thus, redundant ONU 260 replaces the failed ONU 250. In another embodiment, the signals converted by redundant ONU 260 may always be transmitted to ONUs 250. Redundant ONU 260 may take over the conversion of signals for multiple failed ONUs 250. Redundant ONU 260 is further capable of transmitting upstream traffic (λᵤ) for an ONU 250 that has failed.

Each ONU 250 has an associated switch 270. Switches 270 may include any suitable switch operable to receive electrical signals from ONU 250 and transmit the electrical signals to individual subscribers. In another embodiment, switches 270 may be operable to receive and transmit other traffic formats. In a further embodiment, switches 270 may comprise any other device operable to direct traffic, such as routers, hubs, Ethernet switches, or any other traffic routing device, and are collectively referred to as traffic routing devices. Switches 270 are further operable to transmit electrical signals from subscribers to ONU 250 to be converted to optical signals and transmitted to OLT 220. When an ONU 250 fails, or a section of an optical fiber 230 located between RN 240 and the switch 270 fails, switch 270 cannot receive signals from and transmit signals to OLT 220. However, because switches 270 are also connected to redundant switch 280, switches 270 may receive and transmit signals through redundant switch 280.

Redundant switch 280 may include any suitable switch operable to receive a copy of the downstream signal (λ_{d} and λᵥ) converted to an electrical signal by redundant ONU 260, and further operable to transmit the copy of the electrical signal to each switch 270. The electrical signal provided by redundant switch 280 may be used by a switch 270 when the switch 270 does not receive the electrical signal from ONU 250. Furthermore, redundant switch 280 is operable to receive an upstream signal (such as λᵤ) from switch 270. Upon receiving the upstream signal, redundant switch 280 may transmit the signal to redundant ONU 260 to be converted to an upstream optical signal and transmitted to OLT 220.

In one embodiment, each switch 270 is constantly receiving converted electrical signals from redundant switch 280. Therefore, when switch 270 determines that it is not receiving electrical signals from the associated ONU 250 (due to a failure of the ONU 250 or a fiber break to the ONU 250), switch 270 alternatively transmits the electrical signal received from redundant switch 280 to its subscribers. In one embodiment, switches 270 include protection switching capabilities that allow each switch 270 to choose between two received signals based on various factors, such as signal presence and signal quality. In another embodiment, switches 270 do not constantly receive electrical signals from redundant switch 280. In such a case, when a particular switch 270 determines that it is not receiving electrical signals from its associated ONU 250, switch 270 sends a signal to redundant switch 280, prompting redundant switch 280 to begin sending electrical signals to switch 270. In one embodiment, when switch 270 begins using the electrical signals sent from redundant switch 280, switch 270 also begins transmitting the upstream signals received from its subscribers through redundant switch 280 to redundant ONU 260.

Modifications, additions, or omissions may be made to PSPON 200 described without departing from the scope of the invention. The components of the PSPON 200 described may be integrated or separated according to particular needs. Moreover, the operations of the PSPON 200 described may be performed by more, fewer, or other components.

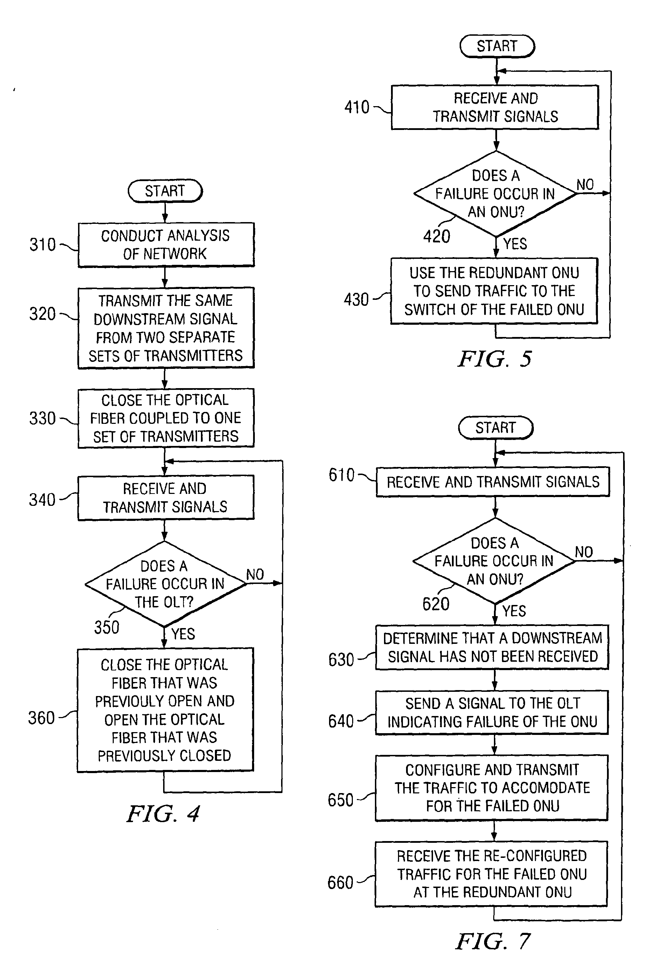

FIGURES 4 and 5 are flowcharts describing protection operations for PSPON 200. FIGURE 4 is a flowchart describing one embodiment of the operation of PSPON 200 for protecting against failures in the OLT of PSPON 200. A failure in the OLT represents a failure at one of the transmitters of the OLT, such as transmitters 222a and 222b.

The method begins at step 310, where an analysis of the entire PSPON 200 is conducted. In order to transmit signals, the transmitters must perform discovery and ranging of the ONUs. This may include determining the serial numbers of each ONU, determining an ONU-ID assigned to each ONU, measuring the arrival phase of upstream transmission from each ONU, creating a notification of the equalization delay (which is sent to each ONU to allow the ONU to adjust upstream transmission), and determining a configuration of the ONUs (which may be accomplished, for example, using the "Configure Port-ID" physical layer operations administration and maintenance (PLOAM) message of the ONU management and control channel (OMCC) for each ONU).

In one embodiment, each set of transmitters is allowed to analyze the entire PSPON every time the network changes, for example, each time an ONU 250 is added or removed. This analysis is conducted by alternating the closing of each optical fiber using selector 235. In another embodiment, only one set of transmitters is allowed to analyze the PSPON each time the network is changed. In such an embodiment, after analyzing the network, the set of transmitters doing the analysis is operable to send the results of the analysis to the other set of transmitters. This allows both sets of transmitters to be continuously upgraded with the status of the PSPON. In one embodiment, the range between the primary set of transmitters and the RN may be different than the range between the redundant set of transmitters and the RN. In such an embodiment, each set of transmitters is further operable to calculate the difference in the range and compensate for that difference. In one embodiment, this calculation and compensation is not required if the difference in distance is less than 30 meters.

After the analysis is conducted, the method moves to step 320 where the identical downstream signal is transmitted from two separate sets of one or more transmitters, such as from transmitter 222a and transmitter 222b (and optionally, the associated transmitters sending traffic in λᵥ). The two sets of transmitters are operable to transmit the same downstream signal because both sets of transmitters are kept active and transmitting at the same time. Therefore, when the primary set of transmitters fails, the redundant set of transmitters does not have to warm up and conduct an analysis of the PSPON before it can begin transmitting signals.

At step 330, the optical fiber coupled to one set of transmitters is closed. Closing the optical fiber coupled to one set of transmitters simultaneously opens the optical fiber coupled to the other set of transmitters. Closing the optical fiber coupled to one set of transmitters allows the downstream signal to be carried between the one set of transmitters and the RN. At the same time, the downstream signal from the other set of transmitters is prevented from being carried to the RN by the open optical fiber. This prevents the RN from receiving two identical copies of the same downstream signal.

At step 340, signals are received at the RN and transmitted throughout the PSPON. In one embodiment, the downstream signal (e.g. comprising λ_{d} and λᵥ) is received at each ONU, converted to an electrical signal, and transmitted to each subscriber by the corresponding switch. Likewise, each upstream signal from the subscribers is transmitted (λᵤ) from each ONU to the OLT.

At step 350, if a failure in the OLT does not occur, the method returns to step 340 where signals are received at the RN and transmitted throughout the PSPON. However, if, at step 350, a failure in the OLT occurs, the method moves to step 360. A failure in the OLT may be determined to have occurred when all of the ONUs in the network do not receive a downstream signal. In a further embodiment, the failure may be determined at the selector when the downstream signal is not received from the OLT through the closed optical fiber. In another embodiment, the failure may be determined at the RN when the downstream signal is not received from the OLT through the closed optical fiber. Alternatively, in one embodiment, the failure may be determined at the ONUs when the downstream signal is not received from the OLT.

At step 360, in response to a failure at the OLT, the selector opens the optical fiber that was previously closed, and closes the optical fiber that was previously opened. This causes the signal being transmitted from the other set of transmitters to be transmitted to the RN, and subsequently transmitted to the ONUs. As a result, the failure at the OLT is bypassed and the communication of signals is protected. Additionally, this protection occurs without the unnecessary delay caused by the other set of transmitters having to warm up and then discover and range each ONU.

Once the alternate optical fiber is closed, the method returns to step 340 where signals are received at the RN and transmitted throughout the PSPON. The method of protecting the PSPON from failures in the OLT continues with further failures in the OLT being monitored and protected against. In one embodiment, if the redundant transmitter set fails, the PSPON may be protected by switching back to the primary transmitter set (which has been fixed).

FIGURE 5 is a flowchart describing one embodiment of the operation of PSPON 200 for protecting against failures in the ONUs of PSPON 200. A failure in the ONUs represents a failure in one or more of the optical fibers downstream of RN or the ONUs. In one embodiment, the method of FIGURE 5 is performed concurrently with the method of FIGURE 4.

At step 410, signals are received at the RN and transmitted throughout the PSPON. In one embodiment, the downstream signal (e.g., comprising traffic in λ_{d} and λᵥ) is received at each ONU, converted to an electrical signal by optical receiver(s), and transmitted to associated subscribers by the corresponding switch. Likewise, each upstream signal (e.g., comprising traffic in λᵤ) from the subscribers is transmitted from each ONU to the OLT.

At step 420, if a failure in one or more ONUs does not occur, the method returns to step 410 where signals are received at the RN and transmitted throughout the PSPON in a normal manner. However, if, at step 420, a failure in one or more of the ONUs does occur, the method moves to step 430.

At step 430, the redundant ONU is used to receive and transmit signals to the switch of the failed ONU(s). The downstream signal (such as λ_{d} and λᵥ) is received at the redundant ONU and converted to an electrical signal. The redundant switch is operable to receive the electrical signal and transmit it to the switch(es) corresponding to the failed ONU(s). The use of the redundant ONU and redundant switch does not effect the downstream signal received by the switch(es) because all of the ONUs, including the redundant ONU, receive downstream traffic on the same λ.

In one embodiment, the redundant switch, connected to the redundant ONU, is constantly transmitting the downstream signal to the switch of each ONU. In such a case, the redundant switch is operable to make a copy of the electrical signal received from the redundant ONU for each switch. Accordingly, since each of the switches is constantly receiving the downstream electrical signal from the redundant switch, the switch is further operable to determine that it has not received an electrical signal from its respective ONU and therefore, the switch selects and forwards the electrical signal received from the redundant switch to its subscribers.

In a further embodiment, the redundant switch is not constantly transmitting the electrical signal received from the redundant ONU to the switches. In such a case, when the switch associated with a failed ONU does not receive a signal from the ONU, the switch sends a signal to the redundant switch, prompting the redundant switch to transmit the electrical signal to the switch. The switch then selects and forwards the signal received from the redundant switch to its subscribers.

In particular embodiments, the redundant switch also receives an upstream signal from the switch(es) of the failed ONU(s). The upstream signal is sent to the redundant ONU, and transmitted to the OLT by the redundant ONU.

After the switch begins to use the redundant ONU instead of the failed ONU, the method returns to step 410. At step 410, the signals are received at the RN and transmitted throughout the PSPON. As a result of using the redundant ONU, the switch corresponding to the failed ONU sends and receives signals through the redundant switch and the redundant ONU. Once the failed ONU is repaired/replaced, the network reverts back to normal operation.

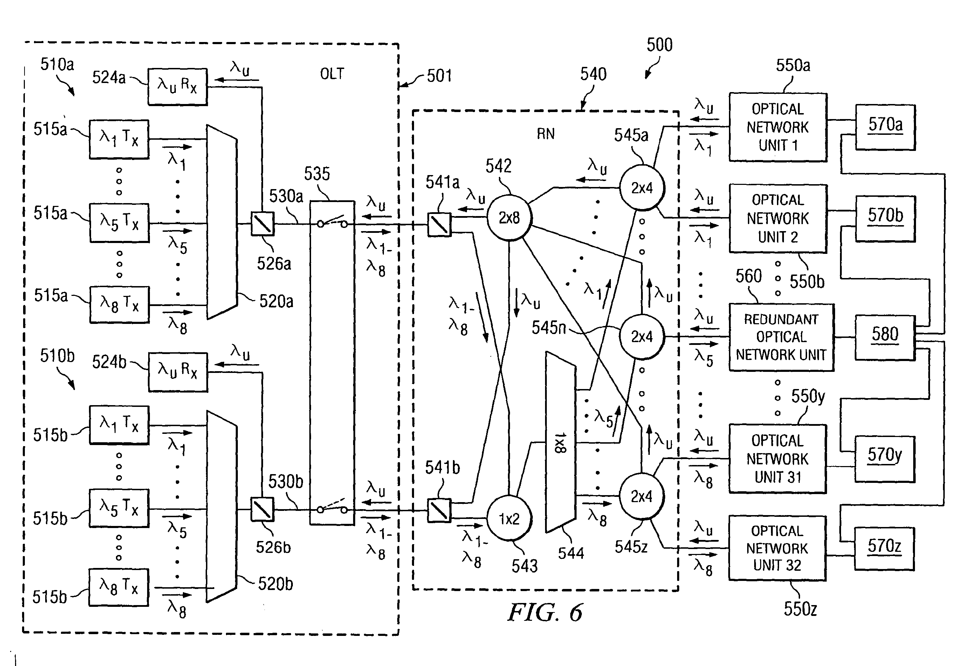

FIGURE 6 is a diagram illustrating an example HPON 500 with redundant protective elements. HPON 500 includes a primary set of transmitters 510a and a redundant set of transmitters 510b that each transmit the same downstream traffic to a selector 535. Selector 535 designates which copy of the downstream traffic is transmitted to ONUs 550, preventing two copies of identical traffic from being transmitted to ONUs 550. HPON further includes a redundant ONU 560 that may provide signals to one or more failed ONUs 550.

HPON 500 further comprises fibers 530, RN 540, switches 570, and redundant switch 580. Example HPON 500 provides greater downstream capacity cost-efficiently by having groups of two or more ONUs 550 share downstream WDM wavelengths. It should be noted that an HPON generally refers to any suitable PON that is not a full WDMPON but that is operable to route downstream traffic in particular wavelengths to particular ONUs (and to transmit upstream traffic in any suitable manner). An HPON may include both an HPON that transmits downstream traffic in a plurality of wavelengths each shared by a group of wavelength-sharing ONUs (a WS-HPON) and an HPON that transmits downstream traffic in a unique wavelength for each ONU (retaining PSPON characteristics in the upstream direction).

In the illustrated example, ONUs 550a-550z may share λ₁-λ₈. It should be noted that any suitable number of ONUs may be associated with one OLT. Additionally, any suitable number of ONUs may share one or more wavelengths in a WS-HPON.

OLT 501 comprises transmitter set 510a, multiplexer 520a, receiver 524a, and filter 526a. Transmitter set 510a includes transmitters 515a that may comprise any suitable transmitter and are operable to transmit traffic over a corresponding wavelength, λ₁-λ₈, respectively. Transmitter set 510a may also include a transmitter operable to transmit traffic in a downstream wavelength λᵥ (not illustrated) for broadcast to all ONUs 550.

Multiplexer 520a comprises any suitable multiplexer/demultiplexer (and may be considered a wavelength router) and is operable to combine the traffic in λ₁-λ₈ and λᵥ (not illustrated) into one signal.

Receiver 524a may comprise any suitable receiver operable to receive upstream traffic from ONUs 550 and redundant ONU 560 carried over time-shared λᵤ. Filter 526a may comprise any suitable filter and is operable to pass the traffic in λ₁-λ₈, respectively. Filter 526a is further operable to direct the upstream traffic in wavelength λᵤ to receiver 524a. In addition, filter 526a is operable to pass the traffic in wavelength λᵥ from the transmitter operable to transmit λᵥ (not illustrated).

OLT 501 further comprises a redundant set of devices substantially similar to those mentioned above with regard to OLT 501. Therefore, OLT 501 includes a redundant transmitter set 510b (which includes redundant transmitters 515b) operable to transmit traffic over a corresponding wavelength, λ₁-λ₈, a redundant multiplexer 520b operable to combine the traffic in λ₁-λ₈ into one signal, a redundant receiver 520b operable to receive upstream traffic from ONUs 550 and redundant ONU 560 carried over time-shared λᵤ, and a redundant filter 526b operable to pass the traffic in λ₁-λ₈ and direct the upstream traffic in wavelength λᵤ to receiver 524b. Redundant transmitter set 510b may also include a transmitter operable to transmit traffic in wavelength λᵥ (not illustrated). In another embodiment, OLT 501 may not include receiver 524b. In such a case, receiver 524a may be coupled to both optical fibers 530 in order to receive upstream traffic λᵤ no matter which optical fiber 530 is closed. In one embodiment, the redundant set of devices allow traffic to be transmitted and received at OLT 501 if the primary set of devices fail. In another embodiment, the redundant set of devices may be located in a redundant OLT separate from OLT 501. In this embodiment, the redundant OLT may be capable of transmitting and receiving traffic if OLT 501 fails.

Optical fibers 530 may include any suitable fiber operable to carry upstream and downstream traffic. According to the illustrated embodiment, optical fiber 530a may be connected to transmitter set 510a of OLT 501. Optical fiber 530b may be connected to redundant transmitter set 510b of OLT 501. In certain HPONs 500, optical fibers 530 may comprise, for example, bidirectional optical fibers. In other HPONs 500, optical fibers 530 may each comprise two distinct fibers, one fiber capable of carrying traffic upstream and the other capable of carrying traffic downstream.

Selector 535 may include any suitable switch operable to alternatively open and close optical fibers 530a and 530b so that only one is capable of communicating traffic through the switch at a time. According to the illustrated embodiment, selector 535 allows both transmitter sets 510a and 510b to be active at the same time (since traffic communicated from one of the transmitter sets is terminated at selector 535). This allows traffic to be transmitted by redundant transmitter set 510b immediately after discovering that transmitter set 510a has failed, or vice versa. Since transmitter set 510a is already active, and not in cold standby such as in some conventional systems, bandwidth is available to the subscriber without having to wait for transmitter set 510b to warm up and then discover and range each ONU 550. As a result, selector 535 eliminates the need to place transmitter 510b in cold standby to prevent it from transmitting traffic that is already being handled by transmitter set 510a. In one embodiment, the signal to alternate the opening and closing of optical fibers 530a and 530b is received from OLT 501. In another embodiment, the signal is received by selector 535 from redundant switch 580, as described below. In the illustrated example, selector 535 is located within OLT 501. Alternatively, selector 535 may be located outside of OLT 501.

RN 540 comprises filters 541, primary coupler 542, primary coupler 543, multiplexer 544, and secondary couplers 545. RN 540 is operable to receive the traffic in λ₁-λ₈, and demultiplex and forward the traffic in λ₁-λ₈ in corresponding groups to wavelength-sharing ONUs 550 and redundant ONU 560. RN 540 is further operable to receive from ONUs 550 and redundant ONU 560 upstream signals carried over time-shared wavelength λᵤ, combine these signals, and forward the combined traffic in λᵤ to OLT 501. To reiterate, HPON 500 is operable to allow wavelength-sharing among groups of ONUs 550, thereby increasing network capacity while avoiding the costly components of a full WDM network.

RN 540 is further operable to receive the optional traffic in λᵥ or other suitable broadcast traffic (not illustrated) from OLT 501, and filter out and broadcast the traffic in λᵥ to each ONU 550 and redundant ONU 560. Although not illustrated, the path of λᵥ to each ONU 550 and redundant ONU is substantially similar to that of λᵤ, but in the opposite direction. Thus, λᵥ is transmitted from one filter 541 to primary coupler 542, copied at primary coupler 542 and transmitted to each secondary coupler 545, and transmitted to each ONU 550 and redundant ONU 560 after being copied at secondary coupler 545. Furthermore, although only one embodiment of a remote node is illustrated in FIGURE 6, any other suitable remote node may be used in HPON 500.

Filters 541 may comprise any suitable filter operable to receive a signal comprising traffic in λ₁-λ₈, and pass the traffic in λ₁-λ₈ to primary coupler 543. If filters 541 receive λᵥ or another broadcast *λ,* filters 541 send it to primary coupler 542. Since selector 535 only closes one optical fiber 530 at a time, only one fiber 541 receives a copy of the downstream traffic. In the upstream direction, filters 541 are operable to each receive the traffic in λᵤ and direct it toward OLT 501.

Primary coupler 543 may comprise any suitable device operable to receive the traffic in λ₁-λ₈ from either of filters 541, and pass the traffic to multiplexer 544. Primary coupler 534 includes an input from both filters 541a and 541b. Although primary coupler 543 includes two inputs, primary coupler 543 only receives a copy of downstream traffic λ₁-λ₈ at one input because selector 535 prevents the transmission of identical copies of downstream traffic from being transmitted through the network.

Multiplexer 544 may include any suitable multiplexer/demultiplexer and is operable to receive the signal comprising the traffic in λ₁-λ₈ and demultiplex the signal. Although in the illustrated example, multiplexer 544 is a 1x8 multiplexer, in alternative networks, multiplexer 544 may have any suitable number of ports. Also, in alternative networks, multiplexer 544 may comprise two or more separate multiplexers receiving downstream signals from one or more upstream sources and forwarding the traffic downstream such that ONUs share wavelengths. In the downstream direction, each output port of multiplexer 544 is operable to forward the traffic in a corresponding one of λ₁-λ₈ to a corresponding secondary coupler 545. In alternative embodiments, the traffic in each wavelength may pass to a different secondary coupler than that illustrated, the traffic in more than one wavelength may pass to a secondary coupler, and/or multiplexer 544 may receive, multiplex, and pass traffic in more or less than eight downstream wavelengths.

In the upstream direction, multiplexer 544 may be operable to receive and terminate the traffic in λᵤ from ONUs 550 and redundant ONU 560. Alternatively, multiplexer 544 may forward this traffic to filters 541 for suitable termination (where termination may be performed internally or externally). Primary coupler 542, in the upstream direction, is operable to receive traffic transmitted by ONUs 550 and redundant ONU 560 over time-shared λᵤ from secondary couplers 545 and combine this traffic into one signal. Primary coupler 542 forwards the upstream signal to OLT 501. Primary coupler 542 thus combines traffic over time-shared λᵤ in the upstream direction. Although primary coupler 542 is illustrated as a 2x8 power splitter, any suitable coupler may be used. In the downstream direction, coupler 542 may be operable to split downstream traffic λᵥ (not illustrated) and forward each copy to secondary couplers 545.

Each secondary coupler 545 may comprise any suitable power splitter operable to receive a signal from multiplexer 544, split the signal into a suitable number of copies, and forward each copy to the ONUs in a corresponding wavelength-sharing group of ONUs 550 and redundant ONU 560 (each group of wavelength-sharing ONUs shares one of λ₁-λ₈ in the downstream direction and redundant ONU 560 may be in one of these groups or receive its own wavelength). In the upstream direction, each secondary coupler 545 is operable to receive traffic transmitted at λᵤ from each ONU 550 (and redundant ONU 560, if applicable) of a corresponding group of ONUs 550 and combine the traffic from each ONU 550 and redundant ONU 560 into one signal. Each secondary coupler 545 is operable to split the combined upstream traffic into two copies and forward one copy to primary coupler 542 and one copy to multiplexer 544. The copy forwarded to primary coupler 542, as described above, is combined with other traffic from other ONUs 550 and redundant ONU 560 transmitted over time-shared λᵤ. The copy forwarded to multiplexer 544 may be blocked or forwarded to filters 541 for suitable termination. Although secondary couplers 545 are illustrated as 2x4 couplers in example HPON 500, secondary couplers 545 may be any suitable coupler or combination of couplers (such as a 2x2 coupler coupled to two 1x2 couplers). Secondary couplers 545 may split or combine any suitable number of signals.

RN 540, in operation, receives a copy of the downstream signal (λ₁-λ₈) at one filter 541 over either optical fiber 530a or 530b. Which filter 541 receives the signal is determined by which optical fiber 530 is closed by selector 535. The filter 541 that receives the downstream signal passes the signal to primary coupler 543. Primary coupler 543 forwards the signal to multiplexer 544. Multiplexer 544 receives the signal comprising the traffic in λ₁-λ₈ and demultiplexes the signal into its constituent wavelengths. Multiplexer 544 then forwards the traffic in each wavelength along a corresponding fiber such that each secondary coupler 545 receives the traffic in a corresponding one of λ₁-λ₈. Each secondary coupler 545 splits the signal into a suitable number of copies. In the illustrated embodiment, each secondary coupler 545 splits the signal into four copies. In this way, a corresponding one of λ₁-λ₈ is transmitted to and shared by one or more groups of ONUs 550, one or more of which may include redundant ONU 560. It should be noted again that the groups of ONUs sharing a wavelength may be different than those illustrated in FIGURE 3, and groups of wavelength-sharing ONUs may share more than one WDM wavelength in alternative networks.

After secondary couplers 545 split the signal comprising the traffic in a corresponding one of λ₁-λ₈ into four copies, secondary couplers 545 forward each copy over fibers 530 such that the ONUs 550 or redundant ONU 560 coupled to the secondary coupler 545 receive a copy.

In the upstream direction, each secondary coupler 545 of RN 540 receives traffic over time-shared λᵤ and combines the traffic from each ONU 550 and redundant ONU 560 in the corresponding group. After receiving and combining traffic over λᵤ into one signal, each secondary coupler 545 splits the signal into two copies, forwarding one copy to multiplexer 544 and one copy to primary coupler 542. As discussed above, multiplexer 544 of example network 500 may block λᵤ or forward λᵤ to filters 541 for suitable termination. Primary coupler 542 receives traffic over λᵤ from each secondary coupler 545, combines the traffic, and forwards the traffic to filters 541. Filters 541 receive the combined traffic in λᵤ and direct the traffic toward OLT 501.

ONUs 550, referred to as primary ONUs, may include any suitable optical network unit or optical network terminal (ONT) and generally refer to a form of access node that converts optical signals transmitted via fiber to electrical signals that can be transmitted to individual subscribers. Subscribers may include residential and/or commercial customers. Typically, HPONs 500 may have thirty-two ONUs 550 per OLT 501. However, any suitable number of ONUs may be provided. In particular embodiments, ONUs 550 may include triplexers that comprise two receivers to receive downstream traffic (one for traffic in one of the wavelengths λ₁-λ₈ and the other for traffic in λᵥ). Each ONU 550, in HPON 500, does not receive downstream traffic in all wavelengths λ₁-λ₈. Instead, each ONU 550 is associated with a group of ONUs 550, each group receiving one particular wavelength between λ₁-λ₈. For example, as illustrated by HPON 500, ONUs 550a and 550b receive downstream traffic in wavelength λ₁, while ONUs 550y and 550z receive downstream traffic in wavelength λ₈. It should be noted that although four ONUs are illustrated as being part of a group of ONUs in HPON 500, any suitable number of ONUs may be part of a group sharing a downstream wavelength. In addition, there may be multiple groups each sharing a different downstream wavelength (as is the case in the illustrated example). It should also be noted that any suitable number of ONUs 550 may be implemented in the network.

The triplexers of each ONU 550 may further comprise a transmitter operable to transmit upstream traffic λᵤ to OLT 501. The transmission rate of the ONU transmitter is typically less than the transmission rate of the OLT transmitter (due to less demand for upstream capacity than for downstream capacity). Each ONU 550 is operable to process its designated downstream traffic and to transmit upstream traffic according to an appropriate time-sharing protocol (such that the traffic transmitted by one ONU in λᵤ does not collide with the traffic of other ONUs in λᵤ).

Redundant ONU 560 is substantially similar to ONUs 550. However, unlike ONUs 550, which convert signals that can be transmitted to individual subscribers, redundant ONU 560 converts signals that may be transmitted to other ONUs 550 (more specifically, the switches 570 associated with the other ONUs 550), if an ONU 550 fails. In particular embodiments, the signal received by redundant ONU 560 may be transmitted to an ONU 550 only if the ONU 550 fails. Thus, redundant ONU 560 replaces the failed ONU 550. Redundant ONU 560 may take over the conversion of signals for multiple failed ONUs 550. Redundant ONU 560 is further capable of transmitting upstream traffic (λᵤ) for an ONU 550 that has failed.

Similar to ONUs 550, redundant ONU 560 may be grouped with ONUs 550. Therefore, one wavelength, such as λ₅, may be sent to a group including one or more ONUs 550 and redundant ONU 560. In one embodiment, HPON 500 includes only one redundant ONU 560 to protect the network in case of failure in any ONU 550. In such a case, redundant ONU 560 may be associated with any group of ONUs 550. In another embodiment, HPON 500 may include more than one redundant ONU 560. For example, each group of ONUs 550 may include a redundant ONU 560. In another embodiment, two or more groups of ONUs 550 may share a redundant ONU 560.

Each ONU 550 has an associated switch 570. Switches 570 may include any suitable switch operable to receive electrical signals from ONU 550 and transmit the electrical signals to individual subscribers. In another embodiment, switches 570 may be operable to receive and transmit other traffic formats. In a further embodiment, switches 570 may comprise any other device operable to direct traffic, such as routers, hubs, Ethernet switches, or any other traffic routing device, and are collectively referred to as traffic routing devices. Switches 570 are further operable to transmit electrical signals from subscribers to ONU 550 to be converted to optical signals and transmitted to OLT 501. When an ONU 550 fails, or a section of an optical fiber 530 located between RN 540 and the switch 570 fails, switch 570 cannot receive signals from and transmit signals to OLT 501. However, because switches 570 are also connected to redundant switch 580, switches 570 may receive and transmit signals through redundant switch 580.

Redundant switch 580 may include any suitable switch operable to receive a copy of one wavelength (such as λ₅) of the downstream signal (and λᵥ) converted to an electrical signal by redundant ONU 560, and further operable to transmit the copy of the electrical signal to each switch 570. The electrical signal provided by redundant switch 580 may be used by a switch 570 when the switch 570 does not receive the electrical signal from its corresponding ONU 550. Furthermore, redundant switch 580 is operable to receive an upstream signal (such as λᵤ) from switch 570. Upon receiving the upstream signal, redundant switch 580 may transmit the signal to redundant ONU 560 to be converted to an upstream optical signal and transmitted to OLT 501.

In one embodiment, switches 570 do not constantly receive electrical signals from redundant switch 580. In such a case, when a particular switch 570 determines that it is not receiving electrical signals from its associated ONU 550 (due to a failure of the ONU 550 or a fiber break to the ONU 550), switch 570 sends a signal to redundant switch 580, prompting redundant switch 580 to begin sending electrical signals to switch 570. Upon receiving the signal from redundant switch 580, switch 570 transmits the electrical signal received from redundant switch 580 to its subscribers. In one embodiment, switches 570 include protection switching capabilities that allow each switch 570 to choose between two received signals based on various factors, such as signal presence and signal quality. In one embodiment, when switch 570 begins using the electrical signals sent from redundant switch 580, switch 570 also begins transmitting the upstream signals received from its subscribers through redundant switch 580 to redundant ONU 560.

Modifications, additions, or omissions may be made to the example HPON 500 described without departing from the scope of the invention. The components of the example HPON 500 described may be integrated or separated according to particular needs. Moreover, the operations of the example HPON 500 described may be performed by more, fewer, or other components. As an example only, any suitable number of wavelength routers may be added to the RN (making suitable changes to the network).

The traffic protection operations of PSPON 200 are described in FIGURES 4 and 7. The operation for protecting against failures in the OLT of HPON 500 is substantially similar to the operation, described in FIGURE 4, of PSPON 200. The only differences are that instead of transmitting the downstream signal in λ_{d}, the downstream signal is a combination of λ₁-λ₈, and instead of transmitter 222a and redundant transmitter 222b, HPON 500 includes transmitter set 510a and redundant transmitter set 510b.

FIGURE 7 is a flowchart describing one embodiment of the operation for protecting against failures in the ONUs of HPON 500. A failure in the ONUs represents a failure in the optical fiber downstream of the RN or the ONUs. In one embodiment, the flowchart of FIGURE 7 is a continuation of step 340 of FIGURE 4.

At step 610, signals are received at the RN and transmitted throughout the HPON. In one embodiment, at the RN, the downstream signal (e.g., comprising traffic in λ₁-λ₈) is broken up into groups, each group containing traffic in one of the wavelengths λ₁-λ₈. The RN transmits the traffic in each wavelength λ₁-λ₈ to the group of ONUs (and/or redundant ONU) corresponding with each particular wavelength. For example, λ₁ may be sent to ONUs 550a and 550b, while λ₈ may be sent to ONUs 550y and 550z. The downstream traffic in the associated wavelength is received at each ONU, converted to an electrical signal, and transmitted to each subscriber by the corresponding switch. Likewise, upstream signals from the subscribers are transmitted (λᵤ) from each ONU to the OLT using a time-sharing scheme.

At step 620, if a failure in one or more ONUs does not occur, the method returns to step 610 where signals are received at the RN and transmitted throughout the HPON. However, if, at step 620, a failure in one or more ONUs does occur, the method moves to step 630.

At step 630, the switch associated with the failed ONU determines that it has not received downstream traffic from its corresponding ONU. As a result, at step 640, the switch sends a signal to the OLT informing the OLT of the ONU failure. In one embodiment, the switch sends the signal directly to the OLT via the redundant switch and redundant ONU. In another embodiment, the switch informs the redundant switch of the failure and the redundant switch sends the signal. Any appropriate control signaling may be used for this purpose.

When the OLT receives the signal, the OLT, at step 650, configures and transmits the downstream traffic to accommodate for the failed ONU. In one embodiment, each wavelength λ₁-λ₈ may be divided into time slots, each time slot corresponding to a particular ONU. For example, wavelength λ₁, received by ONUs 550a and 550b, may be divided into a plurality of time slots. Each of the plurality of time slots corresponds to and is used for transmission of traffic destined for either ONU 550a, ONU 550b, or any other ONU (not illustrated) associated with the group receiving λ₁. When the OLT is notified of the failure of ONU 550a, for example, the OLT may add the downstream traffic addressed to ONU 550a to the wavelength received by the group including redundant ONU 560 (λ₅, for example). As a result, time slots in λ₅ are added for the downstream traffic destined for ONU 550a. This, however, may not be necessary if λ₅ has empty time slots that the downstream traffic destined for ONU 560 may fill. In one embodiment, this configuration of the traffic in a wavelength may occur in order to protect from the failure of multiple ONUs. For example, time slots corresponding to multiple ONUs may be added to the transmitted wavelength associated with the redundant ONU. In this manner, traffic destined for a failed ONU(s) can be switched from a wavelength associated with the failed ONU to a wavelength associated with the redundant ONU to ensure that the traffic can reach the failed ONU via the redundant ONU. In one embodiment, when the failed ONU(s) are using the same wavelength as the redundant ONU (such as when the redundant ONU is in the same group as the failed ONU(s)), the traffic destined for the failed ONU(s) may not be switched to a different wavelength. The wavelength transmitted to the redundant ONU already contains the traffic destined for the failed ONU(s).

At step 660, the re-configured signal is received at the redundant ONU. The redundant ONU receives the re-configured signal and converts it to an electrical signal before transmitting it to the redundant switch. The redundant switch sends the traffic in the re-configured signal to the switch associated with the failed ONU so that the switch can transmit the traffic to its subscribers.

In another embodiment, as a result of the switch determining that it is not receiving the downstream signal from its corresponding ONU, the switch may transmit upstream signals (λᵤ) to the OLT through the redundant switch and the redundant ONU. Thus, the failed ONU does not prevent upstream signals from reaching the OLT.

After the switch associated with the failed ONU begins to use the re-configured wavelength associated with the redundant ONU, the method returns to step 610. At step 610, the signals are received at the RN and transmitted throughout the HPON. As a result of receiving and transmitting signals through the redundant ONU, the network is protected from failures in one or more ONUs. Once the failed ONU is repaired/replaced, traffic may be re-configured back to the original configuration so that the network may revert back to normal operation.

Although embodiments of the invention and its advantages are described in detail, a person skilled in the art could make various alterations, additions, and omissions without departing from the spirit and scope of the present invention as defined by the appended claims.

## Claims

1. A method for protecting traffic in a passive optical network (PON), comprising:
transmitting downstream traffic destined for one or more optical network units (ONUs) from a first set of one or more transmitters;
substantially simultaneously transmitting the same downstream traffic destined for the one or more ONUs from a second set of one or more transmitters; and
selecting either the downstream traffic from the first set of transmitters or the second set of transmitters for communication to a remote node (RN) of the PON.

2. The method of Claim 1, further comprising:
determining that the selected downstream traffic was not received by one or more devices in the network;
selecting the downstream traffic from the other set of transmitters for communication to the RN of the PON.

3. The method of Claim 2, wherein determining that the selected downstream traffic was not received by one or more devices in the network comprises determining that the selected downstream traffic was not received by a selector that selects the downstream traffic for communication to the RN of the PON.

4. The method of Claim 2, wherein determining that the selected downstream traffic was not received by one or more devices in the network comprises determining that the selected downstream traffic was not received by the RN.

5. The method of Claim 2, wherein determining that the selected downstream traffic was not received by one or more devices in the network comprises determining that the selected downstream traffic was not received by one or more traffic routing devices associated with the ONUs.

6. The method of Claim 1, further comprising:
the first set of one or more transmitters performing discovery and ranging of the one or more ONUs; and
the first set of one or more transmitters communicating discovery and ranging information for each of the one or more ONUs to the second set of one or more transmitters.

7. The method of Claims 1, further comprising:
the first set of one or more transmitters performing discovery and ranging of the one or more ONUs; and
the second set of one or more transmitters performing discovery and ranging of the one or more ONUs.

8. The method of Claim 1, wherein the downstream traffic destined for the ONUs comprises:
traffic in a first wavelength to be communicated to a first set of one or more ONUs; and
traffic in a second wavelength to be communicated to a second set of one or more ONUs; and
wherein each set of transmitters includes a transmitter transmitting at the first wavelength and a transmitter transmitting at the second wavelength.

9. A method for protecting traffic in a passive optical network (PON), comprising:
receiving at a redundant optical network unit (ONU) downstream traffic destined for a plurality of primary ONUs;
determining that the downstream traffic was not received by one or more of traffic routing devices; and
communicating the downstream traffic received at the redundant ONU to the one or more traffic routing devices.

10. The method of Claim 9, further comprising transmitting, from the one or more traffic routing devices, information to one or more transmitters transmitting the downstream traffic to cause the one or more transmitters to re-configure the downstream traffic destined for the redundant ONU.

11. The method of Claim 10, wherein transmitting, from the one or more traffic routing devices, information to one or more transmitters transmitting the downstream traffic to cause the one or more transmitters to re-configure the downstream traffic destined for the ONUs comprises:
transmitting information regarding the failure of one or more primary ONUs, from the one or more traffic routing devices, to one or more transmitters transmitting the downstream traffic,
adding, in response to receiving the information, the downstream traffic destined for the one or more failed primary ONUs to a wavelength of downstream traffic destined for the redundant ONU.

12. The method of Claim 9, further comprising transmitting upstream traffic received from one or more subscribers associated with one or more failed primary ONUs to the redundant ONU for communication to an optical line terminal (OLT) of the PON.

13. The method of Claim 9, wherein communicating the downstream traffic received at the redundant ONU to the one or more traffic routing devices comprises always communicating the downstream traffic received at the redundant ONU to the one or more traffic routing devices.

14. The method of Claim 9, wherein communicating the downstream traffic received at the redundant ONU to the one or more traffic routing devices comprises only communicating the downstream traffic received at the redundant ONU to the one or more traffic routing devices after the one or more traffic routing devices request the downstream traffic received at the redundant ONU.

15. The method of Claim 11, wherein the traffic routing devices comprise Ethernet switches.

16. A system for protecting traffic in a passive optical network (PON), comprising:
a first set of one or more transmitters operable to transmit downstream traffic destined for one or more optical network units (ONUs);
a second set of one or more transmitters operable to transmit, substantially simultaneously with the first set of transmitters, the same downstream traffic destined for the one or more ONUs; and
a selector operable to select either the downstream traffic from the first set of transmitters or the second set of transmitters for communication to a remote node (RN) of the PON.

17. The system of Claim 16, wherein:
the selector is further operable, after one or more devices in the network do not receive the selected downstream traffic, to select the downstream traffic from the other set of transmitters for communication to the RN of the PON.

18. The system of Claim 17, wherein the one or more devices in the network comprise the selector.

19. The system of Claim 17, wherein the one or more devices in the network comprise the RN.

20. The system of Claim 17, wherein the one or more devices in the network comprise one or more traffic routing devices associated with the ONUs.

21. The system of Claim 16, wherein:
the first set of one or more transmitters is further operable to perform discovery and ranging of the one or more ONUs, and communicate discovery and ranging for each of the one or more ONUs to the second set of one more transmitters.

22. The system of Claim 16, wherein:
the first set of one or more transmitters is further operable to perform discovery and ranging of the one or more ONUs, and
the second set of one or more transmitters is further operable to perform discovery and ranging of the one or more ONUs.

23. The system of Claim 1, wherein the downstream traffic destined for the ONUs comprises:
traffic in a first wavelength to be communicated to a first set of one or more ONUs; and
traffic in a second wavelength to be communicated to a second set of one or more ONUs; and
wherein each set of transmitters comprises:
a first transmitter operable to transmit at the first wavelength; and
a second transmitter operable to transmit at the second wavelength.

24. A system for protecting traffic in a passive optical network (PON), comprising:
a plurality of primary optical network units (ONUs);
a redundant ONU operable to receive downstream traffic destined for the plurality of primary ONUs;
one or more of traffic routing devices associated with the primary ONUs, each traffic routing device operable to:
receive the downstream traffic from a respective primary ONU;
receive the downstream traffic from the redundant ONU; and
determine that it did not receive the downstream traffic from the respective primary ONU; and
a traffic routing device associated with the redundant ONU operable to communicate the downstream traffic received at the redundant ONU to the one or more traffic routing devices associated with the primary ONUs.

25. The system of Claim 24, wherein each of the one or more traffic routing devices is further operable to transmit information to one or more transmitters transmitting the downstream traffic to cause the one or more transmitters to re-configure the downstream traffic destined for the redundant ONU.

26. The system of Claim 25, wherein:
the information comprises information regarding the failure of one or more primary ONUs; and
the re-configured downstream traffic destined for the redundant ONU comprises the downstream traffic destined for the one or more failed primary ONUs.

27. The system of Claim 24, wherein:
each of the one or more traffic routing devices, when associated with a respective failed primary ONU, is further operable to transmit upstream traffic received from one or more subscribers to the redundant ONU for communication to an optical line terminal (OLT) of the PON.

28. The system of Claim 24, wherein each traffic routing device always receives the downstream traffic from the redundant ONU.

29. The system of Claim 24, wherein each traffic routing device only receives the downstream traffic from the redundant ONU after requesting it.

30. The system of Claim 24, wherein the traffic routing devices comprise Ethernet switches.

31. The system of Claim 24, wherein the traffic routing device associated with the redundant ONU is coupled to all of the traffic routing devices associated with the primary ONUs.
